# EUROPEAN PATENT SPECIFICATION

(11) **EP 0 430 905 B1**
(45) Date of publication and mention of the grant of the patent: **12.10.1994**
(21) Application number: 90830521.2
(22) Date of filing: 13.11.1990
(51) Int. Cl.: B60N 2/38

(54) **An auxiliary seat for agricultural tractors**
Zusatzsitz für Landwirtschaftstraktoren
Siège auxiliaire pour tracteurs agricoles

(30) Priority: 27.11.1989 IT 5350789 U
(43) Date of publication of application: 05.06.1991
(73) Proprietor: SAME S.p.A., I-24047 Treviglio (Bergamo) (IT)
(72) Inventor: Mombelli, Maurizio, I-26025 Pandino (Cremona) (IT)
(74) Representative: Marchitelli, Mauro

(56) References cited:
- EP-A- 0 043 529
- DE-A- 1 964 451
- DE-A- 2 050 844
- DE-C- 3 617 292

## Description

The present invention relates in general to agricultural tractors.

More specifically, the invention relates to an auxiliary seat for agricultural tractors, according to the preamble of claim 1, which is known from DE-C-3 617 292.

DE-C-3 617 292 shows an auxiliary seat provided with a pair of parallel elongated elements which, in the raised position of the seat, are introduced into respective holes provided in the structure of the mudguard.

The auxiliary seat known from the above document is basically free to move, both in its raised and lowered position, under the action of shocks and vibrations and its mounting device is such that the seat can not be located on the top of the mudguard in its raised position.

The object of the present invention is to provide an auxiliary seat which is not affected by the above disadvantages and which is easy and cheap to produce and comfortable and practical in use.

According to the invention, this object is achieved by an auxiliary seat according to claim 1.

To advantage, the support is formed by two resilient arms articulated to the back of the padded flap and, to advantage, is also provided with a projection fixed to the top of the mudguard structure and adapted to engage a recess in the flap in order to locate the flap when it is in the raised position of use.

The auxiliary seat according to the invention is extremely simple and compact in shape, is made from a small number of components which are easy to produce, and can easily be fitted as an accessory to any existing agricultural tractor. The seat has negligible bulk when the padded flap is in the lowered position and it can easily be moved from the lowered position to the raised position, and vice versa, and locked in one position or the other without any difficulty or manual effort. In the raised position of use, the seat provides a temporary arrangement comfortable enough for any passanger.

Further characteristics and advantages of the present invention will become clear from the detailed description which follows with reference to the appended drawings, provided by way of non-limiting example, in which:
Figure 1 is a schematic perspective view of an agricultural tractor provided with an auxiliary seat according to the invention, shown in the raised position of use,
Figure 2 is a perspective view on an enlarged scale, showing the seat in the lowered rest position,
Figure 3 is a view similar to Figure 2, showing the seat during its movement from the lowered configuration to the raised configuration,
Figure 4 is a view similar to Figures 2 and 3 with the seat in the raised configuration of use, and
Figure 5 is a sectional view taken on the line V-V of Figure 4, on an enlarged scale.

With reference to the drawings, an agricultural tractor, generally indicated 1, is provided, in known manner, with a driver's cab 2 in which a seat 3 is provided for the driver.

An auxiliary seat according to the invention, indicated 4, is usable by any passenger P carried in the cab 2.

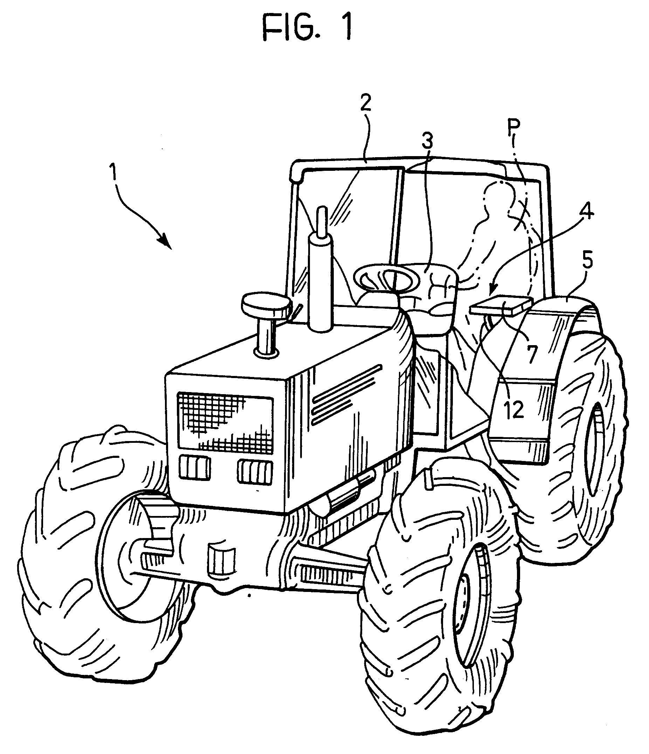

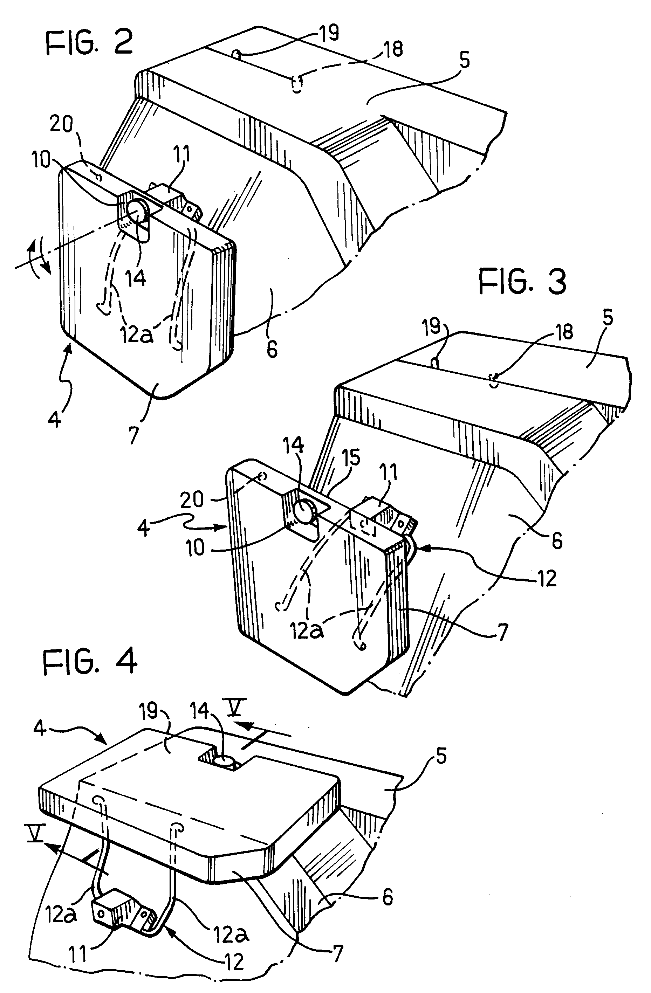

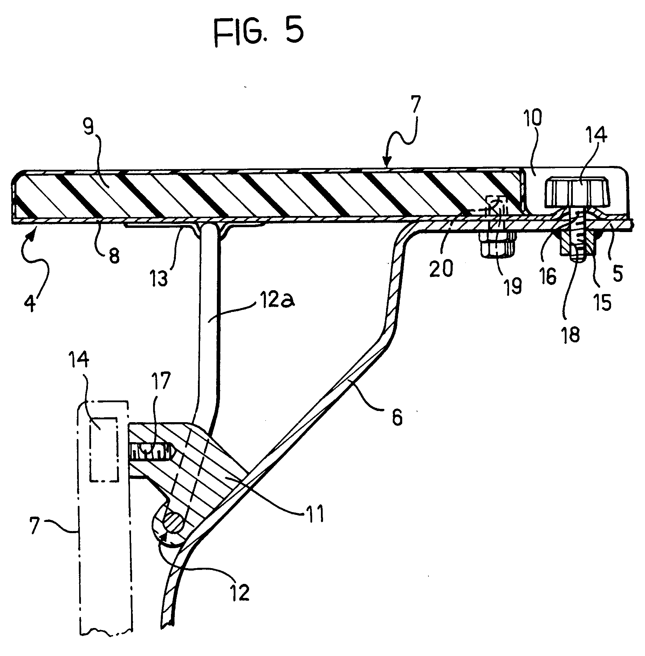

The seat 4 is fitted to the structure of one of the rear mudguards 5 of the tractor 1, on the side 6 of the mudguard 5 which faces inwardly of the cab 2. The seat 4 comprises a padded flap 7 pivotable between the lowered rest position shown in Figure 2 (and in broken outline in Figure 5), in which it is arranged substantially vertically adjacent the side 6 of the mudguard 5, and the raised position of use shown (in continuous outline) in Figures 1, 4 and 5, in which it projects horizontally from the top of the mudguard structure 5 towards the inside of the cab 2.

The padded flap 7 is normally constituted by a rigid metal or plastics base 8 carrying a soft layer, normally of expanded plastics material 9, formed with a cavity or recess 10 in correspondence with the rear edge of the flap 7. The seat 4 is connected to the mudguard structure 5 by means of a mounting 11 which is fixed permanently to the side 6 of the mudguard 5 and to which is articulated a U-shaped element 12 forming two resilient support arms 12a whose free ends are articulated to respective hollow projections 13 fixed to the back of the base plate 8 of the pad 7. Obviously, the element 12 enables the pad 7 to pivot from the lowered position to the raised position, and vice versa, in the manner shown in Figure 3, and also enables it to be oriented vertically in the lowered position and horizontally in the raised position. A rotatable knob 14 for locking the pad 7 firmly in one position or the other is housed in the recess 10 and has a threaded shank 15 which is inserted in a freely rotatable manner in a corresponding aperture 16 in the base 8. When the pad 7 is in the lowered rest position, the threaded shank 15 is screwed into a threaded hole 17 formed in the face of the mounting 11 and, when the pad 7 is in the raised position of use, the threaded shank 15 is screwed into a threaded bush 18 fitted to the top of the mudguard structure 5 and projecting beneath or, according to a variant not shown, above it. Naturally, the threaded shank 15 is screwed in and unscrewed by the manual rotation of the knob 14.

In order to facilitate the centring of the threaded shank 15 relative to the threaded bush 18, a locating projection 19 is conveniently provided which is fixed to the mudguard structure 5 and projects from its top beside the threaded bush 18. The projection 19 is adapted to engage a complementary recess 20 in the base 8 when the pad 7 is in the raised position. Alternatively, the projection 19 could be fixed to the base 8 for engagement in a corresponding hole formed in the top of the mudguard structure 5.

When the seat 4 is in the raised position of use, the soft conformation of the pad 7 and the resilience of the arms 12a ensure that the passenger P is fairly comfortable. In its lowered rest position, the bulk of the seat 4 is minimal and at any rate is such as not to constitute an obstruction to the driver's freedom of movement.

The auxiliary seat 4 can be fitted equally well to the right-hand or left-hand mudguard of the tractor and it is also envisaged that two identical seats 4 fitted to both mudguards could be used.

## Claims

1. An auxiliary seat for agricultural tractors, comprising a padded flap (7) fitted to the structure of a mudguard (5) of the tractor (1) on the side (6) thereof facing the cab (2) of the tractor and pivotable between a lowered rest position in which it is arranged substantially vertically against the side (6) of the mudguard structure (5) and a raised position of use in which it projects horizontally, whereby the padded flap (7) is connected to a support (12) articulated to a mounting (11) fixed to the side (6) of the mudguard structure (5), characterised in that the padded flap (7) in its raised position projects from the top of the mudguard structure (5) and in that the auxiliary seat is provided with means (14, 15, 17, 18) for locking the padded flap (7) in the lowered and raised position, the locking means being constituted by a screw knob (14, 15) fitted rotatably in the padded flap (7) and adapted, in the two positions thereof, to engage corresponding threaded holes (17, 18) in the mounting (11) and in the top of the mudguard structure (5) respectively.

2. An auxiliary seat according to Claim 1, characterised in that it also includes means (19) for locating the padded flap (7) relative to the top of the mudguard structure (5) when the seat (4) is in the raised position of use.

3. An auxiliary seat according to Claim 1, characterised in that the support (12) defines a pair of resilient arms (12a) articulated to the back (8) of the padded flap (7).

## Patentansprüche

1. Zusatzsitz für Landwirtschaftstraktoren, der eine gepolsterte Klappe (7) umfaßt, die an der Konstruktion eines Kotflügels (5) des Traktors (1) auf der dem Führerhaus (2) des Traktors zugewandten Seite (6) derselben angebracht ist und zwischen einer heruntergeklappten Ruhestellung, in der sie im wesentlichen vertikal an der Seite (6) der Kotflügelkonstruktion (5) angeordnet ist, und einer hochgeklappten Funktionsstellung, in der sie horizontal vorsteht, geschwenkt werden kann, wobei die gepolsterte Klappe (7) mit einer Stütze (12) verbunden ist, die an einer an der Seite (6) der Kotflügelkonstruktion (5) befestigten Halterung (11) gelenkig angebracht ist, **dadurch gekennzeichnet,** daß die gepolsterte Klappe (7) in ihrer hochgeklappten Stellung von der Oberseite der Kotflügelkonstruktion (5) vorsteht, und dadurch, daß der Zusatzsitz mit einer Einrichtung (14, 15, 17, 18) zum Arretieren der gepolsterten Klappe (7) in der heruntergeklappten und der hochgeklappten Stellung versehen ist, wobei die Arretiereinrichtung durch einen Schraubenknopf (14,15) gebildet wird, der drehbar in der gepolsterten Klappe (7) angebracht ist und in den beiden Stellungen derselben in entsprechende Gewindelöcher (17, 18) in der Halterung (11) bzw. in der Oberseite der Kotflügelkonstruktion (5) eingreift.

2. Zusatzsitz nach Anspruch 1, **dadurch gekennzeichnet,** daß er des weiteren eine Einrichtung (19) enthält, mit der die gepolsterte Klappe (7) in bezug auf die Oberseite der Kotflügelkonstruktion (5) positioniert wird, wenn sich der Sitz (4) in der hochgeklappten Funktionsstellung befindet.

3. Zusatzsitz nach Anspruch 1, **dadurch gekennzeichnet,** daß die Stütze (12) ein Paar elastischer Arme (12a) aufweist, die an der Rückseite (8) der gepolsterten Klappe (7) gelenkig angebracht sind.

## Revendications

1. Siège auxiliaire pour tracteur agricole, comprenant une sellette (7) munie d'un coussin et montée sur la structure d'un garde-boue (5) du tracteur (1) d'un côté (6) de celui-ci, vers la cabine (2) du tracteur, la sellette pouvant pivoter entre une position baissée de repos dans laquelle elle est placée contre le côté (6) de la structure (5) du garde-boue en position pratiquement verticale, et une position levée d'utilisation dans laquelle elle dépasse horizontalement, la sellette (7) munie d'un coussin étant raccordée à un support (12) articulé sur un organe (11) de montage fixé au côté (6) de la structure du garde-boue (5), caractérisé en ce que la sellette (7) munie d'un coussin, lorsqu'elle est dans sa position levée, dépasse de la partie supérieure de la structure (5) du garde-boue, et en ce que le siège auxiliaire comporte un dispositif (14, 15, 17, 18) destiné à bloquer la sellette (7) en position baissée ou en position levée, le dispositif de blocage étant constitué par un bouton à vis (14, 15) monté dans la sellette (7) afin qu'il puisse tourner et destiné, dans ses deux positions, à coopérer avec des trous taraudés correspondants (17, 18) formés dans l'organe de montage (11) et à la partie supérieure de la structure du garde-boue (5) respectivement.

2. Siège auxiliaire selon la revendication 1, caractérisé en ce qu'il comporte aussi un dispositif (19) de positionnement de la sellette (7) par rapport à la partie supérieure de la structure de garde-boue (5) lorsque le siège (4) est dans sa position levée d'utilisation.

3. Siège auxiliaire selon la revendication 1, caractérisé en ce que le support (12) délimite deux bras élastiques (12a) articulés sur le dos (8) de la sellette (7).
